# EUROPÄISCHE PATENTSCHRIFT

(11) **EP 2 935 106 B1**
(45) Veröffentlichungstag und Bekanntmachung des Hinweises auf die Patenterteilung: **12.07.2017**
(21) Anmeldenummer: 13811948.2
(22) Anmeldetag: 19.12.2013
(51) Int. Cl.: C01C 1/08, B05B 1/02, B01J 19/26, B01D 53/90, B01D 53/94, F01N 3/30

(54) **AMMONIAKGASGENERATOR, VERFAHREN ZUR HERSTELLUNG VON AMMONIAK SOWIE VERWENDUNG DERSELBEN ZUR REDUKTION VON STICKOXIDEN IN ABGASEN**
AMMONIA GAS GENERATOR, METHOD FOR PRODUCING AMMONIA AND USE OF THE SAME FOR REDUCING NITROGEN OXIDES IN EXHAUST GASES
GÉNÉRATEUR DE GAZ AMMONIAC, PROCÉDÉ DE PRODUCTION D'AMMONIAC ET LEUR UTILISATION POUR LA RÉDUCTION D'OXYDES D'AZOTE DANS DES GAZ D'ÉCHAPPEMENT

(30) Priorität: 21.12.2012 DE 102012025112; 21.12.2012 DE 102012025113
(43) Veröffentlichungstag der Anmeldung: 28.10.2015
(73) Patentinhaber: AlzChem AG, 83308 Trostberg (DE)
(72) Erfinder: GERHART, Christian, 83313 Siegsdorf (DE); MIDDELMANN, Henning, 58313 Herdecke (DE)
(74) Vertreter: Dey, Michael
(86) Internationale Anmeldenummer: PCT/EP2013/077440
(87) Internationale Veröffentlichungsnummer: WO 2014/096220

(56) Entgegenhaltungen:
- DE-A1- 4 203 807
- JP-A- 2006 122 792
- US-A1- 2012 087 840

## Beschreibung

Die vorliegende Erfindung betrifft einen Ammoniakgasgenerator zur Erzeugung von Ammoniak aus einer Ammoniakvorläufersubstanz, ein Verfahren zur Erzeugung vom Ammoniak sowie deren Verwendung in Abgasnachbehandlungssystemen zur Reduktion von Stickoxiden in Abgasen.

In Abgasen von Verbrennungskraftmaschinen sind oftmals Stoffe enthalten, deren Emission in die Umwelt unerwünscht ist. Daher werden in vielen Ländern Grenzwerte für die Emission solcher Schadstoffe, wie beispielsweise im Abgas von Industrieanlagen oder Automobilen festgelegt, die einzuhalten sind. Zu diesen Schadstoffen zählen neben einer Reihe anderer Schadstoffe auch Stickoxide (NOₓ), wie insbesondere Stickstoffmonoxid (NO) oder Stickstoffdioxid (N0₂).

Die Reduzierung der Emission dieser Stickoxide aus Abgasen von Verbrennungsmotoren kann auf verschiedene Art und Weise erfolgen. Hervorzuheben ist an dieser Stelle die Reduktion durch zusätzliche Abgasnachbehandlungsmaßnahmen, die insbesondere auf die selektive katalytische Reduktion (selective catalytic reduction - SCR) zurückgreifen. Diesen Methoden ist gemeinsam, dass ein selektiv auf die Stickoxide wirkendes Reduktionsmittel dem Abgas zugegeben wird, worauf in Gegenwart eines entsprechenden Katalysators (SCR-Katalysator) eine Umwandlung der Stickoxide erfolgt. Hierbei werden die Stickoxide in weniger umweltschädliche Stoffe, wie beispielsweise Stickstoff und Wasser umgewandelt.

Ein heute bereits eingesetztes Reduktionsmittel für Stickoxide stellt Harnstoff (H₂N-CO-NH₂) dar, welches in Form einer wässrigen Harnstofflösung dem Abgas zugegeben wird. Dabei kann sich der Harnstoff im Abgasstrom in Ammoniak (NH₃) zersetzen, beispielsweise durch Einwirkung von Wärme (Thermolyse) und/ oder durch Reaktion mit Wasser (Hydrolyse). Der somit gebildete Ammoniak stellt das eigentliche Reduktionsmittel für Stickoxide dar.

Die Entwicklung von Abgasnachbehandlungssystemen für Automobile wird seit geraumer Zeit betrieben und ist Gegenstand zahlreicher Publikationen. So wird beispielsweise mit der europäischen Patentschrift EP 487 886 B1 ein Verfahren zur selektiven katalytischen NOₓ-Reduktion in sauerstoffhaltigen Abgasen von Dieselmotoren beschrieben, in dem Harnstoff und dessen Thermolyseprodukte als Reduktionsmittel eingesetzt werden. Zudem wird eine Vorrichtung zur Erzeugung vom Ammoniak in Form eines Röhrenverdampfers beschrieben, die eine Sprühvorrichtung, einen Verdampfer mit Verdampferrohr und einen Hydrolysekatalysator umfasst.
Des Weiteren wird mit der Europäischen Patentschrift EP 1 052 009 B1 ein Verfahren und eine Vorrichtung zur Durchführung des Verfahrens zur thermischen Hydrolyse und Dosierung von Harnstoff bzw. Harnstofflösungen in einem Reaktor unter Zuhilfenahme eines Abgasteilstroms beschrieben. In dem Verfahren wird einem Abgasstrang stromauf des SCR-Katalysators ein Teilstrom des Abgases entnommen und durch den Reaktor geleitet, wobei der nach der Hydrolyse im Reaktor mit Ammoniak beladene Teilstrom ebenfalls noch stromauf des SCR-Katalysators wieder in den Abgasstrang zurückgeführt wird.

Zudem wird mit der europäischen Patentschrift EP 1 338 562 B1 eine Vorrichtung und Verfahren beschrieben, welches die katalytische Reduktion von Stickoxiden durch Ammoniak nutzt. Der Ammoniak wird hierbei unter Bedingungen der Blitzthermolyse aus Harnstoff in fester Form sowie der Hydrolyse aus Isocyansäure gewonnen und dem Abgasstrom eines Fahrzeuges zugeleitet.

Des Weiteren wird mit der europäischen Patentanmeldung EP 1 348 840 A1 eine Abgasreinigungsanlage als eine als Ganzes transportable Baueinheit in Form eines 20-Fuß-Containers beschrieben. Die Anlage wird derart betrieben, dass eine Harnstoff- oder Ammoniaklösung direkt mittels einer Eindüsungsvorrichtung in den Abgasstrom eingedüst wird. Die Reduktion der in dem Abgas enthaltenden Stickoxide erfolgt an einem SCR-Katalysator.

Weiterhin wird mit der deutschen Patentanmeldung DE 10 2006 023 147 A1 eine Vorrichtung zur Erzeugung von Ammoniak beschrieben, die Teil eines Abgasnachbehandlungssystems ist.

Zudem wird weiterhin mit den internationale Anmeldung WO 2008/ 077 587 A1 und WO 2008/077588 A1 ein Verfahren zur selektiven katalytischen Reduktion von Stickoxiden in Abgasen von Fahrzeugen mittels wässrigen Guanidiniumsalzlösungen beschrieben. In diesen Verfahren wird ein Reaktor eingesetzt, der aus den wässrigen Guanidiniumsalzlösungen Ammoniak erzeugt.

Neuere Entwicklungen auf dem Gebiet der Abgasnachbehandlung sind Gegenstand aktueller Arbeiten. So wurde in jüngerer Zeit auch das Konzept der AmmoniakErzeugung außerhalb eines Abgasstranges weiterverfolgt. Ausführungen zu Generatoren und Verfahren zum Betreiben dieser Generatoren sind den internationalen Anmeldungen PCT/EP2012/062757, PCT/EP2012/062750 und PCT/EP2012/062752 zu entnehmen.

Auch wenn Ammoniakgasgeneratoren seit geraumer Zeit bekannt sind, so ist dennoch bis heute keine Realisierung der Technik in einem Fahrzeug oder einer anderen Verwendung verwirklicht worden. Bis heute wurde das Konzept der Direkteinspritzung einer Ammoniakvorläufersubstanz in den Abgasstrom einer Brennkraftmaschine verfolgt, wobei diese Ammoniakvorläufersubstanz durch geeignete Maßnahmen im Abgasstrang in das eigentliche Reduktionsmittel zerfällt. Aufgrund von unvollständiger Zersetzung oder Nebenreaktionen von Zersetzungsprodukten im Abgasstrang werden jedoch immer wieder Ablagerungen beobachten, die zur Beeinträchtigung der im Abgasstrang weiterhin vorhandenen Katalysatoren und Filter führen.

Daher liegt der vorliegenden Erfindung die Aufgabe zugrunde, einen Ammoniakgasgenerator sowie Verfahren zur Herstellung von Ammoniak, insbesondere zur Reduktion von Stickoxiden in Abgasen von Kraftfahrzeugen bereitzustellen, der/das die Nachteile des Standes der Technik überwindet. Bevorzugt wird der Ammoniakgasgenerator derart bereitgestellt, dass er außerhalb eines Abgasstranges einer Abgasanlage eines Verbrennungsmotors angeordnet ist. In das Abgas kann dann erfindungsgemäß der erzeugte Ammoniak und nicht eine Ammoniakvorläuferverbindung eingebracht werden. Weiterhin soll das Verfahren zur Erzeugung von Ammoniak mittels einfacher apparativer Maßnahmen durchgeführt werden können, eine hohe Umsatzrate von Ammoniakvorläufersubstanzen in Ammoniakgas bereitstellen sowie einen langen Einsatz ohne Wartung der Generators erlauben.

Diese Aufgaben werden gelöst durch einen Ammoniakgasgenerator gemäß Anspruch 1 sowie ein Verfahren zur Erzeugung von Ammoniak gemäß Anspruch 4.

Die Erfindung betrifft einen Ammoniakgasgenerator zur Erzeugung von Ammoniak aus einer Lösung einer Ammoniakvorläufersubstanz umfassend i) eine Katalysatoreinheit, die einen Katalysator zur Zersetzung und/ oder Hydrolyse von Ammoniakvorläufersubstanzen in Ammoniak und eine dem Katalysator vorgelagerte Mischkammer umfasst, wobei der Katalysator ein Katalysatorvolumen V_{Kat} und die Mischkammer ein Mischkammervolumen V_{Misch} aufweist, ii) eine Eindüsungsvorrichtung zur Einbringung der Lösung der Ammoniakvorläufersubstanz in die Mischkammer, iii) mindestens einen Einlass für ein Trägergas und iv) einen Auslass für das gebildete Ammoniakgas, wobei der Ammoniakgasgenerator weiterhin v) eine Lochscheibe umfasst, durch die das Trägergas in Form einer Vielzahl an parallelen Strahlen senkrecht zur Katalysatorstirnfläche in die Mischkammer eingebracht wird.

Hervorzuheben ist an dieser Stelle, dass ein Ammoniakgasgenerator gemäß der vorliegenden Erfindung eine separate Baueinheit zur Erzeugung von Ammoniak aus Ammoniakvorläufersubstanzen ist. Eine solche Baueinheit kann beispielsweise zur Reduktion von Stickoxiden in Industrieabgasen oder zur Abgasnachbehandlung von Abgasen aus Verbrennungsmotoren, wie beispielsweise Dieselmotoren eingesetzt werden. Dieser Ammoniakgasgenerator kann autark arbeiten oder auch mit Hilfe von Abgasseitenströmen betrieben werden, wobei jedoch in jedem Fall der gebildete Ammoniak in den Abgasstrom eingebracht und erst in einem nachfolgenden Prozessschritt eine Reduzierung von Stickoxiden mittels Ammoniak stattfindet. Falls ein erfindungsgemäßer Ammoniakgasgenerator als separates Bauteil in einer Abgasnachbehandlungsanlage eines Verbrennungsmotors, beispielsweise eines Dieselmotors verwendet wird, kann somit eine Reduzierung der Stickoxide im Abgasstrom vorgenommen werden, ohne weitere Katalysatoren zur Spaltung von Ammoniakvorläufersubstanzen oder andere Bauteile in den Abgasstrom selbst einzubringen. Der mit dem erfindungsgemäßen Ammoniakgasgenerator erzeugte Ammoniak kann somit bedarfsgerecht in den Abgasstrom eingeleitet werden. Eine eventuelle Verkürzung der Lebensdauer des SCR-Katalysators durch Verunreinigungen in Form von Ablagerungen aus beispielsweise Ammoniakvorläufersubstanzen oder Produkten der Spaltung von Ammoniakvorläufersubstanzen wird ebenfalls vermieden. Insbesondere wird
erfindungsgemäß der erzeugte Ammoniak selbst und nicht Ammoniakvorläuferverbindungen in den Abgasstrom eingeleitet.

Weiterhin soll im Zusammenhang mit der vorliegenden Erfindung unter einer Eindüsungsvorrichtung, die eine Düse umfasst, jedwede Vorrichtung oder Düse verstanden sein, die eine Lösung, vorzugsweise wässrige Lösung, einer Ammoniakvorläufersubstanz versprüht, vernebelt oder anderweitig zu Tropfen ausbildet, wobei die Lösung der Ammoniakvorläufersubstanz in Form von Tropfen ausgebildet wird, die insbesondere einen Tropfen- oder Tröpfchendurchmesser D₃₂ von 26 bis 100 µm, mehr bevorzugt von 26 bis 49 µm und ganz besonders bevorzugt von 26 bis 40µm, aufweisen. Der Tropfen- oder Tröpfchendurchmesser D₃₂ bezieht sich im Zusammenhang mit der vorliegenden Erfindung auf den Sauterdurchmesser entsprechend der Deutschen Industrienorm DIN 66 141.

Des Weiteren soll unter einer Katalysatoreinheit gemäß der vorliegenden Erfindung eine Baueinheit verstanden sein, die ein Gehäuse zur Aufnahme eines Katalysators, eine in Strömungsrichtung dem Katalysator vorgelagerte Mischkammer und mindestens einen Katalysator zur Zersetzung und/ oder Hydrolyse von Ammoniakvorläufersubstanzen in Ammoniak umfasst, wobei der Katalysator ein Katalysatorvolumen V_{Kat} und die Mischkammer ein Mischkammervolumen V_{Misch} aufweist. Die Mischkammer wird dabei in Strömungsrichtung einerseits durch die Katalysatorstirnfläche und andererseits durch eine Lochscheibe begrenzt. Gegebenenfalls kann die Katalysatoreinheit zusätzlich eine dem Katalysator in Strömungsrichtung nachgelagerte Auslasskammer zum Auslass des gebildeten Ammoniakgases umfassen.

Es hat sich gezeigt, dass trotz optimaler Eindüsgeometrie (Winkel und Abstand), insbesondere bei einer Anwendung mit Trägergasstrom, eine nicht optimale Gleichverteilung der Tröpfchen auf der Katalysatorstirnwand erreicht wird. Überraschenderweise hat sich herausgestellt, dass im Betrieb des Ammoniakgasgenerators mit einem senkrecht zur Katalysatorstirnfläche geführten Trägergasstrom (nachfolgend synonym auch Transportgasstrom) Ablagerungen an den Wandungen der Katalysatoreinheit im Bereich der Mischkammer unterbunden werden können und eine dauerhaft gute Durchmischung von Trägergas (nachfolgend synonym auch Transportgas) und der Lösung der Ammoniakvorläufersubstanz bereitgestellt werden kann. Dieser Effekt ist besonders deutlich, wenn das Trägergas in Form einer Vielzahl an parallelen Strahlen in die Mischkammer eingebracht wird, die durch eine Lochscheibe erzeugt wird. Wird ein solcher senkrecht zur Katalysatorstirnfläche geführten Trägergasstrom in Form von parallel geführten Strahlen nicht eingesetzt, so können durch das Versprühen der Lösungen von Ammoniakvorläufersubstanz in die Mischkammer ein Benetzen der Wandung der Katalysatoreinheit im Bereich der Mischkammer erfolgen und unerwünschte Nebenreaktionen wie beispielsweise eine Polymerisation der Ammoniakvorläufersubstanz erfolgen. Diese Nebenreaktionen führen zu unerwünschten Ablagerungen im Bereich der Mischkammer, wodurch eine für die Funktion des Generators außerordentlich wichtige Durchmischung von Trägergas und Lösung der Ammoniakvorläufersubstanz dauerhaft nicht weiter ermöglicht ist. Aufgrund der mangelhaften Durchmischung des Trägergases mit der Lösung sind zudem weitere Ablagerungen im und am Katalysator selbst zu beobachten. Durch den senkrecht zur Katalysatorstirnfläche geführten Trägergasstrom in Form von parallelen Strahlen des Trägergases wird eine Schleierströmung mit den Tröpfchen erzeugt, die axial in Richtung des Hydrolysekatalysators auf die Hydrolysekatalysatorstirnfläche geführt wird. Diese Schleierströmung ermöglicht eine sehr gute Umsetzung zum Ammoniak am Katalysator.

Die Zuführung des Trägergases erfolgt im Kopfbereich des Generators, vorzugsweise in Höhe der Eindüsungsvorrichtung der Ammoniakvorläuferlösung in die Katalysatoreinheit bzw. in die Mischkammer.

Das Trägergas und insbesondere der senkrecht zur Katalysatorstirnfläche geführten Trägergasstrom, und ganz besonders bevorzugt die durch die Lochscheibe erzeugte Vielzahl an parallelen Strahlen wird/ werden vorzugsweise mit einer Temperatur von bis zu 550 °C, bevorzugt mit einer Temperatur von 250 bis 550 °C, weiterhin bevorzugt mit einer Temperatur von 250 bis 400 °C und ganz besonders bevorzugt mit einer Temperatur von 300 bis 350 °C in die Mischkammer eingeführt. Es kann jedoch auch vorgesehen sein, dass das Trägergas und insbesondere der senkrecht zur Katalysatorstirnfläche geführten Trägergasstrom, mit einer Temperatur von weniger als 250 °C, insbesondere von weniger als 200 °C, weiterhin bevorzugt von weniger als 150 °C, besonders bevorzugt von weniger als 100°C und ganz besonders bevorzugt von weniger als 80 °C in die Mischkammer eingebracht wird, wobei die Temperatur gleichzeitig mindestens 10 C, insbesondere mindestens 20 °C und ganz besonders bevorzugt 25 °C betragen soll.

Weiterhin überraschend hat sich gezeigt, dass durch den Einsatz einer Lochscheibe der eingebrachte Trägergasstrom in eine Vielzahl an Teilströme aufgespalten werden kann, und hierdurch eine besonders gleichmäßige Verteilung der gebildeten Tropfen auf der Katalysatorstirnfläche erzeugt werden kann. Die gleichmäßige Verteilung der gebildeten Tropfen auf der Katalysatorstirnfläche kann dabei insbesondere weiterhin verbessert werden, wenn im Zentrum der Lochscheibe die Düsenöffnung der Düse angeordnet ist. Somit kann mit der Vielzahl an Teilströmen des Trägergases ein allseits umhüllender Mantel für die eingesprühten Tropfen bereitgestellt werden. Dieser Mantel verhindert die Ablagerung von Ammoniakvorläufersubstanzen oder nicht erwünschten Abbauprodukten hieraus an den Innenwandungen der Katalysatoreinheit.

Damit ist in einer bevorzugten Ausführung auch ein Ammoniakgasgenerator Gegenstand der vorliegenden Erfindung, der eine Lochscheibe umfasst, in dessen Zentrum eine Düse angeordnet ist, insbesondere in dessen Zentrum mindestens eine Düsenöffnung der Düse angeordnet ist.

Gemäß einer bevorzugten Ausführung der vorliegenden Erfindung umfasst der Ammoniakgasgenerator eine Eindüsungsvorrichtung, die eine Düse umfasst, die insbesondere Tropfen mit einem Sauterdurchmesser D₃₂ von 26 bis 100 µm erzeugt. Ganz besonders bevorzugt ist ein Ammoniakgasgenerator, der eine Lochscheibe umfasst, in dessen Zentrum eine Düsenöffnung der Düse angeordnet ist, wobei die Düse insbesondere Tropfen mit einem Sauterdurchmesser D₃₂ von 26 bis 100 µm, mehr bevorzugt von 26 bis 49 µm und ganz besonders bevorzugt von 26 bis 40µm, erzeugt.

Insbesondere wird mit der vorliegenden Erfindung ein Ammoniakgasgenerator bereitgestellt, der autark vom Abgasstrom eines Verbrennungsmotors oder einer Industrieanlage, das heißt ohne Zuhilfenahme eines Abgasstroms oder Abgasteilstroms aus einem Verbrennungsgas als Trägergas arbeitet. Insbesondere wird in dem erfindungsgemäßen Ammoniakgasgenerator Ammoniak aus einer Ammoniakvorläufersubstanz gebildet in Abwesenheit eines Abgasstroms.

Damit ist gemäß einem weiteren Aspekt auch ein Verfahren zur Herstellung von Ammoniak, insbesondere zur kontinuierlichen Herstellung von Ammoniak, aus einer Lösung einer Ammoniakvorläufersubstanz Gegenstand der vorliegenden Erfindung, indem der hiermit beschriebene Ammoniakgasgenerator zum Einsatz gebracht wird und das Trägergas in Form eines senkrecht zur Katalysatorstirnfläche geführten Trägergasstroms in Form einer Vielzahl an parallelen Strahlen, in die Mischkammer oder Katalysatoreinheit eingebracht oder eingedüst wird, und die parallelen Strahlen durch eine Lochscheibe erzeugt werden. Dabei kann vorgesehen sein, dass die Lösung der Ammoniakvorläufersubstanz derart in die Katalysatoreinheit oder die Mischkammer eingebracht oder eingedüst wird, dass die Lösung in Form von Tropfen mit einem Sauterdurchmesser D₃₂ von 26 bis 100 µm in Katalysatoreinheit oder Mischkammer eingebracht oder eingedüst wird. Gemäß dem Verfahren der Erfindung wird ein Trägergas in Form eines senkrecht zur Katalysatorstirnfläche geführten Trägergasstroms, in Form von parallelen Strahlen, in die Katalysatoreinheit oder die Mischkammer eingedüst oder eingebracht. Hierbei kann weiterhin besonders bevorzugt vorgesehen sein, dass die Lösung der Ammoniakvorläufersubstanz als Aerosol in eine Vielzahl an parallelen Strahlen des Trägergases eingebracht wird.

Überraschender Weise hat sich gezeigt, dass zusätzlich zu der Verbesserung durch die parallel geführten Strahlen des Trägergases weitere Ablagerungen vermieden und die Umsatzrate nochmals verbessert werden kann. Durch die gezielte Auswahl der Düse bzw. des gezielten Einsatzes einer Düse, die Tropfen mit einem Sauterdurchmesser von 26 bis 100 µm erzeugt, erfolgt eine Verteilung der Tropfen über nahezu den gesamten Strömungsquerschnitt und somit eine gleichförmigere Benetzung der Katalysatorstirnfläche. Ohne an die Theorie gebunden zu sein, kann gesagt werden, dass Tropfen zu kleiner Größe eine zu geringe Trägheit aufweisen. Hierdurch wird die tropfenhaltige Strömung lediglich auf einen Teilbereich der Katalysatorstirnfläche aufgebracht. Durch die größere Trägheit der größeren Tropfen kann eine tropfenhaltige Strömung bereitgestellt wird, die nahezu 100 % der Katalysatorstirnfläche benetzt, insbesondere auch in Gegenwart eines Trägergasstroms.

Zudem konnte festgestellt werden, dass sich Tröpfchen mit einem Sauterdurchmesser D₃₂ von 26 bis 100 µm durch die Trägergasströmung weniger ablenken lassen und es zu einem homogeneren Sprühbild, speziell in den äußeren Bereichen (Bereich größer 80 % des Durchmessers) der Katalysatorstirnfläche und einer insgesamt gleichmäßigeren Verteilung auf dem Katalysator kommt. Tröpfchen mit einem Sauterdurchmesser D₃₂ von 26 bis 100 µm behalten durch ihre Trägheit den ursprünglichen durch die Düse vorgegebenen Sprühwinkel bis zum Auftreffen auf die Katalysatorstirnfläche bei und es kommt deshalb zu einer gleichmäßigeren Benetzung der Katalysatorstirnfläche entsprechend des gegebenen Sprühwinkels der Düse.

Gleichzeitig konnte durch den Einsatz einer Düse, die Tropfen mit einem Sauterdurchmesser D₃₂ von 26 bis 100 µm erzeugt, ein einfacher Aufbau und eine kompakte Bauweise des Ammoniakgasgenerators selbst verwirklicht werden.

Weiterhin vollkommen unvorhersehbar konnte festgestellt werden, dass der notwendige Energiebedarf bzw. Druck zur Zerstäubung von Tröpfchen mit größerem Sauterdurchmesser (entspricht Bildung weniger neuer Flüssigkeitsoberfläche) deutlich geringer ist. Hierdurch ergibt sich eine besonders einfache Bauweise des Generators.

Gemäß einer bevorzugten Ausführung der vorliegenden Erfindung kann die Eindüsungsvorrichtung eine Düse umfassen, die Tropfen mit einem Sauterdurchmesser D₃₂ von 26 µm, insbesondere mindestens 30 µm und besonders bevorzugt mindestens 32 µm erzeugt, wobei die Tropfen gleichzeitig oder unabhängig hiervon einen Sauterdurchmesser von höchstens 100 µm, insbesondere höchstens 90 µm, besonders bevorzugt höchstens 80 µm, besonders bevorzugt höchstens 70 µm, ganz besonders bevorzugt höchstens 60 µm und am meisten bevorzugt höchstens 49 µm und noch mehr bevorzugt höchstens 40 µm aufweisen.

Damit ist gemäß der vorliegenden Erfindung vorgesehen, dass die Eindüsungsvorrichtung ihrerseits eine Düse umfasst, die Tröpfchen mit einem Tröpfchendurchmesser D₃₂ in einem definierten Bereich erzeugt. Durch die Verwendung von solchen Düsen kann ein Ammoniakbildungsgrad AG von > 97 % erreicht werden. Zudem kann eine besonders gleichmäßige Verteilung der Lösung auf die Katalysatorstirnfläche erfolgen. Der Ammoniakbildungsgrad AG ist hierbei und im Folgenden definiert als die im Ammoniakgasgenerator erzeugte Molmenge NH₃ bezogen auf die theoretisch bei vollständiger Hydrolyse der Ammoniakvorläufersubstanz zu erzeugende Molmenge an Ammoniak. Ein Ammoniakbildungsgrad von > 97 % wird gemäß der vorliegenden Erfindung als vollständige Umsetzung betrachtet.

Es wird erfindungsgemäß durch eine gleichmäßige Tröpfchenbelastung eine Überschreitung der maximalen Stirnflächenbelastung in einzelnen Ringbereichen vermieden. Nur dadurch kann gewährleistet bleiben, dass eine annähernd vollständige Umsetzung auf der gesamten Katalysatorstirnfläche erfolgt und es nicht bei längerem Einsatz zu ringförmigen Ablagerungen an der Katalysatorstirnfläche kommt. Damit kann eine zusätzliche Wartung vermieden werden.

Es wird weiterhin beschrieben, dass die Eindüsungsvorrichtung ihrerseits eine Düse umfasst, die eine sogenannte Zweistoffdüse ist. Unter einer Zweistoffdüse wird hierbei eine Düse verstanden, die als Treibmittel ein unter Druck stehendes Gas, im Allgemeinen Luft, zum Oberflächenaufbruch der flüssigen Phase und damit zur Tröpfchenbildung verwendet. Dies unter Druck stehende Gas wird auch als Zerstäubungsluft bezeichnet. Weiterhin beschrieben ist ein damit auch ein Ammoniakgasgenerator, der eine Eindüsungsvorrichtung umfasst, die eine Zweistoffdüse ist, in der die in die Mischkammer einzubringende Lösung mit Druckluft beaufschlagt wird. Bevorzugt wird eine Zweistoffdüse mit einem Sauterdurchmesser D₃₂ von 26 bis 100 µm.

Alternativ oder unabhängig hiervon kann der Ammoniakgasgenerator eine Düse umfassen, die eine erste Anzahl an Düsenöffnungen zur Einbringung der Lösung in die Mischkammer aufweist, die von einer zweiten Anzahl an Düsenöffnungen zur Einbringung von Druckluft oder Trägergas in die Mischkammer ringförmig umgeben ist.

Alternativ kann der Ammoniakgasgenerator eine Düse umfassen, die druckluftlos betrieben wird. Diese sogenannte Einstoffdüse oder Injektor arbeitet mit einem mechanischen Flüssigkeitsaufbruch ohne zusätzlichen Luftstrom. Bevorzugt wird eine Einstoffdüse mit einem Sauterdurchmesser D₃₂ von 26 bis 100 µm. Dabei ist besonders bevorzugt eine Einstoffdüse mit mehreren Öffnungen bzw. Bohrlöchern. Ganz besonders bevorzugt ist die Kombination von mehr als einer Einstoffdüse für die Einbringung der Lösung in den Ammoniakgasgenerator.

Wie bereits beschrieben kann der Ammoniakgasgenerator unabhängig oder abhängig von einem Abgasstrom eines Verbrennungsmotors oder einer Industrieanlage betrieben werden. Damit kann in dem Verfahren zur Herstellung von Ammoniakgas ein
Trägergas eingesetzt werden, dass eine Temperatur T_{(K)} im Bereich von 10 bis 550 °C aufweist. Besonders bevorzugt ist jedoch ein Verfahren, in dem ein Trägergas eingesetzt wird, das mit einer Temperatur T_{(K)} im Bereich von 10 bis 200 °C in die Mischkammer (51) eingebracht wird.

Überraschender Weise hat sich herausgestellt, dass der Ammoniakgasgenerator auch mit einem Trägergas oder einem Trägergasstrom mit einer Temperatur unterhalb der Zersetzungstemperatur (Zersetzungstemperatur > 200 °C) der Ammoniakvorläufersubstanz betrieben werden kann. Die benötigte Energie zur Zersetzung wird hierbei im Wesentlichen durch den beheizbaren Katalysator bereitgestellt. Überraschender Weise ist diese Energiezufuhr ausreichend um einen vollständigen Umsatz und eine hohe Umsatzrate von > 97% zu erzielen.
Alternativ kann dieses Verfahren auch mit einem Trägergas geführt werden, in dem ein Trägergas eingesetzt wird, das eine Temperatur T_{(K)} im Bereich von 250 bis 550 °C aufweist.

Weiterhin bevorzugt kann in diesem Verfahren die Lösung der Ammoniakvorläufersubstanz als Aerosol in die Vielzahl an parallelen Strahlen des Trägergases eingebracht werden. Dieses Aerosol kann insbesondere durch eine Zweistoffdüse oder eine Einstoffdüse erzeugt werden.

Des Weiteren kann ohne Einschränkung vorgesehen sein, dass in dem Verfahren die Lösung der Ammoniakvorläufersubstanz gemeinsam oder getrennt von dem Trägergas in die Mischkammer eingebracht wird. Insbesondere ist jedoch vorgesehen, dass das Trägergas parallel zur Lösung der Ammoniak-Vorläufersubstanz, insbesondere als Bündel von parallelen Strahlen, in die Mischkammer eingebracht wird.

In einem erfindungsgemäßen Verfahren kann weiterhin vorgesehen sein, dass das Trägergas mit einem Überdruck in die Mischkammer eingebracht wird. Unabhängig oder gleichzeitig kann dabei vorgesehen sein, dass das Trägergas mit einem Druck in die Mischkammer eingebracht wird, der notwendig ist, um eine Druckdifferenz delta p_{(K)} im Bereich von 10 bis 100 mbar zwischen dem Einlass für das Trägergas und dem Auslass für das Ammoniakgas zu überwinden. Weiterhin bevorzugt ist ein Verfahren, indem das Trägergas mit einem Unterdruck nach Reaktor durch die Mischkammer gesaugt wird.

Somit sind im Betrieb des Generators keinerlei weitere Maßnahmen notwendig, um das gebildete Ammoniakgas zur Reduktion von Stickoxiden in Abgasen von Verbrennungsmotoren oder Industrieabgasen einzuleiten. Der Unterdruck könnte hierbei im speziellen durch einen Venturimischer im Abgasstrang des Verbrennungsmotors oder der Industrieanlage erzeugt werden. Durch den Unterdruck wird das Trägergas in Form eines Trägergasstroms durch den Ammoniakgasgenerator gesaugt. Somit kann der Ammoniakgasgenerator ohne Überdruck betrieben werden. Durch den Unterdruck kann somit in besonders vorteilhafter weise eine Druckdifferenz delta p_{(K)} im Bereich von 10 bis 100 mbar zwischen dem Einlass für das Trägergas und dem Auslass für das Ammoniakgas überwunden werden. Auch diese Maßnahmen erlauben den Verzicht von Abgasnebenströmen bzw. -teilströmen und insbesondere kann als Trägergas Umgebungsluft verwendet werden.

Damit ist auch ein Verfahren zur Reduktion von Stickoxiden in Abgasen von Verbrennungsmotoren umfassend ein Verfahren zur Erzeugung von Ammoniak gemäß der hierin beschriebenen Art Gegenstand der vorliegenden Erfindung, in dem das entstehende Ammoniakgas in den Abgasstrang des Verbrennungsmotors direkt in einen Venturimischer eingebracht wird.

Gemäß einer Weiterbildung der vorliegenden Erfindung ist auch vorgesehen, dass das Verhältnis des Volumens der Mischkammer V_{Misch} zum Volumen des Katalysators V_{Kat} dem Verhältnis von 1 : 1 bis 5 : 1 entspricht. Überraschender Weise hat sich gezeigt, dass die eingesprühte Ammoniakvorläufersubstanz dann vollständig (Umsatz > 97 %) in Ammoniak zersetzt werden kann, wenn die Tröpfchen der Lösung bereits vor dem Auftreffen auf die Katalysatorstirnfläche teilweise verdampft werden. Dies kann dadurch gewährleistet sein, dass das Volumen der Mischkammer größer ist als das Volumen des Katalysators. Durch ein teilweises Verdampfen der Tröpfchen wird der Lösung bereits genügend Energie zugeführt, so dass ein zu starkes Abkühlen an der Katalysatorstirnfläche durch zu große Tropfen vermieden wird und damit einer schlechteren Zersetzung bzw. Nebenproduktbildung entgegengewirkt wird. Außerdem wird durch ein entsprechendes Mischkammervolumen V_{Misch} sichergestellt, dass die versprühte Ammoniakvorläufersubstanz als Aerosol homogen im Transportgasstrom verteilt über den Querschnitt auf dem Katalysator auftrifft und Spots mit zu hoher Konzentration, was wiederum eine schlechtere Umsetzung zur Folge hätte, vermieden werden. Ganz besonders bevorzugt ist hierbei vorgesehen, dass das Verhältnis des Volumens der Mischkammer V_{Misch} zum Volumen des Katalysators V_{Kat} von 2 : 1 bis 5 : 1, besonders bevorzugt von 1 : 1 bis 5 : 1, besonders bevorzugt 3 : 1 bis 5 : 1 und ganz besonders bevorzugt 3,5 : 1 bis 5 : 1 beträgt.

Als Katalysator zur Zersetzung und/ oder Hydrolyse von Ammoniakvorläufersubstanzen kann im Rahmen der vorliegenden Erfindung jeder Katalysator verwendet werden, der die Freisetzung von Ammoniak aus der Vorläufersubstanz unter katalytischen Bedingungen ermöglicht. Ein bevorzugter Katalysator hydrolisiert die Ammoniakvorläufersubstanz zu Ammoniak und weiteren unschädlichen Stoffen wie Stickstoff und Kohlendioxid und Wasser. Bevorzugt handelt es sich bei dem Katalysator somit um einen Hydrolysekatalysator.

Wird eine Ammoniakvorläufersubstanz-Lösung, beispielsweise eine Guanidiniumsalz-Lösung, insbesondere eine Guanidiniumformiat-Lösung, eine Harnstoff-Lösung oder Mischungen hiervon verwendet, so kann die katalytische Zersetzung zu Ammoniak in Gegenwart von katalytisch aktiven, nicht oxidationsaktiven Beschichtungen aus Oxiden, ausgewählt aus der Gruppe Titandioxid, Aluminiumoxid und Siliciumdioxid sowie deren Mischungen, oder/und hydrothermal stabilen Zeolithen, die vollständig oder teilweise metallausgetauscht sind, insbesondere Eisenzeolithen vom ZSM 5- oder BEA-Typ, vorgenommen werden. Als Metalle kommen hierbei insbesondere die Nebengruppen-Elemente und vorzugsweise Eisen oder Kupfer in Frage. Die Metalloxide wie Titanoxid, Aluminiumoxid sowie Siliciumdioxid werden vorzugsweise auf metallischen Trägermaterialien wie z. B. Heizleiter-Legierungen (insbesondere Chrom-Aluminium-Stähle) aufgebracht.

Besonders bevorzugte Katalysatoren sind Hydrolysekatalysatoren, die insbesondere katalytisch aktive Beschichtungen aus Titandioxid, Aluminiumoxid und Siliciumdioxid sowie deren Mischungen hiervon umfassen.

Alternativ kann die katalytische Zersetzung der Ammoniakvorläufersubstanz, der Guanidiniumformiat-Lösungen bzw. der übrigen Komponenten auch zu Ammoniak und Kohlendioxid erfolgen, wobei katalytisch aktive Beschichtungen aus Oxiden, ausgewählt aus der Gruppe Titandioxid, Aluminiumoxid und Siliciumdioxid sowie deren Mischungen, oder/und hydrothermal stabilen Zeolithen, die vollständig oder teilweise metallausgetauscht sind, eingesetzt werden, die mit Gold und/oder Palladium als oxidationsaktive Komponenten imprägniert sind. Die entsprechenden Katalysatoren mit Palladium und/oder Gold als Aktivkomponenten weisen vorzugsweise einen Edelmetallgehalt von 0,001 bis 2 Gew.-%, insbesondere 0,01 bis 1 Gew.-% auf. Mit Hilfe derartiger Oxidationskatalysatoren ist es möglich, die unerwünschte Bildung von Kohlenmonoxid als Nebenprodukt bei der Zersetzung des Guanidiniumsalzes, insbesondere bei der Zersetzung von Formiaten, bereits bei der Ammoniakerzeugung zu vermeiden.

Bevorzugt wird für die katalytische Zersetzung des Guanidiniumformiats sowie ggf. den weiteren Komponenten eine katalytische Beschichtung mit Palladium oder/und Gold als Aktivkomponenten mit einem Edelmetallgehalt von 0,001 bis 2 Gew.-%, insbesondere 0,01 bis 1 Gew.-% eingesetzt.

Somit wird hierin auch ein Ammoniakgasgenerator beschrieben, der einen Hydrolysekatalysator mit einer katalytisch aktive Beschichtung umfasst, die mit Gold und/ oder Palladium imprägniert ist, insbesondere mit einem Gehalt an Gold und/oder Palladium von 0,001 bis 2 Gew.-% (bezogen auf die katalytische Beschichtung). Weiterhin bevorzugt weist dieser Katalysator eine katalytisch aktive Beschichtung aus Oxiden ausgewählt aus der Gruppe Titandioxid, Aluminiumoxid und Siliciumdioxid sowie deren Mischungen, oder/und hydrothermal stabilen Zeolithen auf, die mit Gold und/oder Palladium imprägniert ist, wobei weiterhin bevorzugt der Gehalt an Gold und/oder Palladium 0,001 bis 2 Gew.-% (bezogen auf die katalytische Beschichtung) beträgt.

Es ist im Rahmen der vorliegenden Erfindung möglich, dass man einen Hydrolysekatalysator einsetzt, der in Strömungsrichtung aus mindestens zwei Abschnitten besteht, wobei der erste Abschnitt nicht oxidationsaktive Beschichtungen und der zweite Abschnitt oxidationsaktive Beschichtungen enthält. Vorzugsweise besteht 5 bis 90 Vol.-% dieses Katalysators aus nicht oxidationsaktiven Beschichtungen und 10 bis 95 Vol-% aus oxidationsaktiven Beschichtungen. Insbesondere bestehen 15 bis 80 Vol-% dieses Katalysators aus nicht oxidationsaktiven Beschichtungen und 20 bis 85 Vol-% aus oxidationsaktiven Beschichtungen. Alternativ kann man die Hydrolyse auch in Gegenwart von zwei hintereinander angeordneten Katalysatoren durchführen, wobei der erste Katalysator nicht oxidationsaktive Beschichtungen und der zweite Katalysator oxidationsaktive Beschichtungen enthält. Weiterhin bevorzugt kann es sich bei dem ersten Hydrolysekatalysator auch um einen beheizten Katalysator und bei dem zweiten Hydrolysekatalysator um einen nicht beheizten Katalysator handeln.

Darüber hinaus kann vorgesehen sein, dass man einen Hydrolysekatalysator einsetzt, der aus mindestens zwei Abschnitten besteht, wobei der in Strömungsrichtung angeordnete erste Abschnitt in Form eines beheizten Katalysators und der in Strömungsrichtung angeordnete zweite Abschnitt in Form eines nicht beheizten Katalysators vorliegt. Vorzugsweise besteht der Katalysator zu 5 bis 50 Vol.-% aus dem ersten Abschnitt und zu 50 bis 95 Vol-% aus dem zweiten Abschnitt.

Gemäß einer besonders bevorzugten Ausführung der vorliegenden Erfindung ist daher vorgesehen, dass der Ammoniakgasgenerator eine Katalysatoreinheit mit einem mindestens zweigeteilten, besonders bevorzugt mindestens dreigeteilten, Hydrolysekatalysator umfasst, dessen in Strömungsrichtung erster Teil in Form eines beheizten Katalysators, der vorzugsweise eine direkte elektrische Widerstandsheizung und/oder eine Mantelheizung aufweist, ausgebildet ist, während der zweite Teil in Form eines nicht beheizten Katalysators ausgeführt ist, dem ganz besonders bevorzugt stromab als dritter Teil ein nicht beheizter Katalysator mit Mischerstruktur folgt.

Es hat sich ergeben, dass für eine vollständige katalytische Umsetzung der Ammoniakvorläufersubstanzen vorzugsweise Katalysatoren mit einer Katalysatorzellenzahl von mindestens 9,3 Zellen pro cm² (60 cpsi) (cpsi: cells per square inch - Zellenanzahl an der Stirnfläche des Katalysators) und den bereits oben beschriebenen Katalysatorvolumina eingesetzt werden. Dabei begrenzt der ansteigende Gegendruck (Druckverlust über den Katalysator) die Katalysatorzellenzahl auf höchstens 124 Zellen pro cm² (800 cpsi) für eine Anwendung in einem Ammoniakgasgenerator. Besonders bevorzugt sind solche Katalysatoren, insbesondere Hydrolysekatalysatoren, die eine Katalysatorzellenzahl von 15,5 bis 93 Zellen pro cm² (100 bis 600 cpsi pro inch²) Stirnfläche, von 15,5 bis 77,5 Zellen pro cm² (100 bis 500 cpsi pro inch²) Stirnfläche und ganz besonders bevorzugt von 15,5 bis 62 Zellen pro cm² (100 bis 400 cpsi pro inch²) Stirnfläche des Katalysators aufweisen.

Hinsichtlich der Ausgestaltung der Katalysatoreinheit hat sich in den Testungen herausgestellt, dass eine zylindrische Bauform besonders gut geeignet ist. Hierbei kann der Trägergasstrom seine volle Wirkung entfalten. Andere Bauformen sind hingegen weniger geeignet, da hierbei eine zu starke Verwirbelung zu beobachten ist. Somit ist auch ein Ammoniakgasgenerator Gegenstand der vorliegenden Erfindung, der eine Katalysatoreinheit umfasst, die in Form eines Zylinders ausgebildet ist.

Darüber hinaus hat sich als besonders vorteilhaft erwiesen, wenn der Ammoniakgasgenerator eine Katalysatoreinheit umfasst, die ihrerseits mindestens eine thermische Isolationsschicht, insbesondere eine thermische Isolationsschicht aus mikroporösem Dämmmaterial aufweist.

Des Weiteren kann vorgesehen sein, dass der Ammoniakgasgenerator weiterhin eine Dosiereinheit zur Dosierung der Lösung der Ammoniakvorläufersubstanz umfasst, die der Eindüsungsvorrichtung vorgeschaltet ist. Somit kann eine präzise Regelung des zu Erzeugenden Ammoniaks über diese Dosiereinheit erfolgen. Wird beispielsweise ein vermehrter Ausstoß an Stickoxiden im Abgas eines Motors verzeichnet, so kann über die gezielte Steuerung der mit der Eindüsungsvorrichtung eingedüsten Menge an Vorläufersubstanz eine definierte Menge an Ammoniak freigesetzt werden.

Als Ammoniakvorläufersubstanzen werden gemäß der vorliegenden Erfindung chemische Substanzen verstanden, die in eine Lösung überführt werden können und die Ammoniak mittels physikalischer und/oder chemischer Prozesse abspalten oder in sonstiger Form freisetzen können. Als Ammoniakvorläuferverbindungen können gemäß der vorliegenden Erfindung insbesondere Harnstoff, Harnstoffderivate, Guanidine, Biguanidine sowie Salze dieser Verbindungen sowie Salze des Ammoniaks eingesetzt werden. Insbesondere können gemäß der vorliegenden Erfindung Harnstoff und Guanidine oder Salze hiervon eingesetzt werden. Insbesondere können solche Salze eingesetzt werden, die aus Guanidinen und organischen oder anorganischen Säuren gebildet werden. Als besonders bevorzugt sind hierbei Guanidiniumsalze der allgemeinen Formel (I) anzusehen, 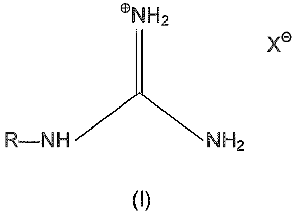 wobei
- R =: H, NH₂ oder C₁-C₁₂-Alkyl,
- X^{⊖} =: Acetat, Carbonat, Cyanat, Formiat, Hydroxid, Methylat oder Oxalat, bedeuten.

Besonders bevorzugt ist Guanidiniumformiat.

Im Rahmen der vorliegenden Erfindung können diese Guanidiniumsalze als Einzelsubstanz oder als Mischung aus zwei oder mehreren unterschiedlichen Guanidiniumsalzen verwendet werden. Gemäß einer bevorzugten Ausführungsform werden die erfindungsgemäß eingesetzten Guanidiniumsalze mit Harnstoff und/oder Ammoniak und/oder Ammoniumsalzen kombiniert. Alternativ können gemäß einer weiteren Ausführung der vorliegenden Erfindung jedoch auch wässrige Harnstofflösungen eingesetzt werden. Die Mischungsverhältnisse von Guanidiniumsalz mit Harnstoff sowie Ammoniak bzw. Ammoniumsalzen können in weiten Grenzen variiert werden. Es hat sich jedoch als besonders vorteilhaft erwiesen, wenn die Mischung von Guanidiniumsalz und Harnstoff einen Guanidiniumsalz-Gehalt von 5 bis 60 Gew.-% und einen Harnstoff-Gehalt von 5 bis 40 Gew.-%, insbesondere von 5 bis 35 Gew.-% besitzt. Des Weiteren sind Mischungen von Guanidiniumsalzen und Ammoniak bzw. Ammoniumsalzen mit einen Gehalt an Guanidiniumsalz von 5 bis 60 Gew.-% und von Ammoniak bzw. Ammoniumsalz von 5 bis 40 Gew.-% als bevorzugt anzusehen. Alternativ kann jedoch auch eine Harnstoff-Lösung insbesondere eine wässrige Harnstofflösung verwendet werden.

Als Ammoniumsalze haben sich hierbei vor allem Verbindungen der allgemeinen Formel (II) bewährt

R-NH₃^{⊕}X^{⊖} (II)

wobei
- R =: H, NH₂ oder C₁-C₁₂-Alkyl,
- X^{⊖} =: Acetat, Carbonat, Cyanat, Formiat, Hydroxid, Methylat oder Oxalat bedeuten.

Die erfindungsgemäß eingesetzten Ammoniakvorläufersubstanzen, insbesondere Guanidiniumsalze sowie ggf. die weiteren Komponenten, bestehend aus Harnstoff bzw. Ammoniumsalzen kommen in Form einer Lösung zum Einsatz, wobei als Lösemittel vor allem Wasser und/oder ein C₁-C₄-Alkohol bevorzugt eingesetzt werden. Die wässrigen und/oder alkoholischen Lösungen weisen hierbei einen bevorzugten Feststoffgehalt von 5 bis 85 Gew.-%, insbesondere 30 bis 80 Gew.-%, auf.

Dabei hat sich überraschend gezeigt, dass gemäß der vorliegenden Erfindung sowohl wässrige Guanidinformiatlösung in der Konzentration von 20 bis 60 Gew.-%, als auch wässrige Harnstofflösung in der Konzentration von 25 bis 40 Gew.-% als auch wässrige Mischungen aus Guanidiniumformiat und Harnstoff-Lösungen, wobei Guanidiniumformiat und Harnstoff in einer Konzentration von 5 bis 60 Gew.-% Guanidiniumformiat und 5 bis 40 Gew.-% Harnstoff in der Mischung enthalten ist, besonders gut eingesetzt werden können.

Die wässrigen Lösung der Ammoniakvorläufersubstanzen, insbesondere der Guanidiniumsalze, der Gemische von Guanidiniumsalze oder der Guanidiniumsalze in Kombination mit Harnstoff in Wasser besitzen hierbei ein bevorzugtes Ammoniak-Bildungspotential von 0,2 bis 0,5 kg Ammoniak pro Liter Lösung, insbesondere 0,25 bis 0,35 kg Ammoniak pro Liter Lösung.

Die hierin beschriebenen Ammoniakgasgeneratoren sind aufgrund ihrer kompakten Bauweise besonders für den Einsatz in Industrieanlagen, in Verbrennungsmotoren wie beispielsweise Dieselmotoren und Benzinmotoren, sowie Gasmotoren geeignet. Daher umfasst der vorliegenden Erfindung auch die Verwendung des beschriebenen Verfahrens zur Reduktion von Stickoxiden in Abgasen aus Industrieanlagen, aus Verbrennungsmotoren wie beispielsweise Dieselmotoren und Benzinmotoren, sowie aus Gasmotoren. Weiterhin beschrieben wird ein Abgasnachbehandlungssystem umfassend einen Ammoniakgasgenerator der hiermit beschriebenen Art.

Es wird hierin weiterhin ein Abgasnachbehandlungssystem beschrieben, das weiterhin einen Venturimischer umfasst, wobei insbesondere der Auslass für das gebildete Ammoniakgas des Ammoniakgasgenerators und der Venturimischer durch eine Leitung verbunden sind, insbesondere direkt verbunden sind. Ganz besonders bevorzugt umfasst die Erfindung auch ein Abgasnachbehandlungssystem, das weiterhin einen Venturimischer umfasst, wobei der Auslass für das gebildete Ammoniakgas und der Venturimischer durch eine Leitung verbunden sind, insbesondere direkt verbunden sind, und der Venturimischer Bestandteil der Abgasleitung eines Fahrzeugs ist, wobei der Venturimischer in Strömungsrichtung des Abgases vor einem SCR-Katalysator angeordnet ist.

Es hat sich besonders überraschend herausgestellt, dass durch die direkte Verbindung zwischen dem Ausgang des Ammoniakgasgenerators für das Ammoniakgas und einem Venturimischer in einem Abgasstrang eines Kraftfahrzeugs, ein Druckgefälle aufgebaut werden kann, mit welchem der erzeugte Ammoniak ohne weitere Hilfsmittel in den Abgasstrang eingebracht werden kann. Wesentlich hierbei ist, dass das Ammoniakgas direkt in den Venturimischer eingebracht wird. Somit kann gleichzeitig auch eine genügend hohe Verwirbelung des zu reduzierenden Abgases und dem Ammoniakgas erfolgen.

Vorzugsweise ist die Anordnung der Eindüsungsvorrichtung und des Hydrolysekatalysators innerhalb des erfindungsgemäßen Ammoniakgenerators derart, dass die Eindüsungsvorrichtung eine Düse umfasst, die einen theoretischen Sprühwinkel α von 10° bis 90° aufweist und der Abstand der Düsenöffnung zur Stirnfläche des Katalysators von 15 bis 2.000 mm beträgt.

Weiterhin bevorzugt wird die Lösung der Ammoniakvorläufersubstanz derart eingebracht, dass die Stirnflächenbelastung des Katalysators 0,2 bis 15 g/(h·cm²), vorzugsweise mindestens 1,0 und noch mehr bevorzugt mindestens 3,0 g/(h·cm²) beträgt.

Im Folgenden wird die vorliegende Erfindung anhand von Zeichnungen und zugehörigen Beispielen näher erläutert. Hierbei zeigt
- Figur 1:: eine schematische Ansicht eines erfindungsgemäßen Ammoniakgasgenerators im axialen Querschnitt,
- Figur 2:: ein schematischer Aufbau einer Abgasanlage in einem Fahrzeug,
- Figur 3:: einen radialen Querschnitt der Mischkammer (Draufsicht) im Bereich der Trägergasstromzuführung.

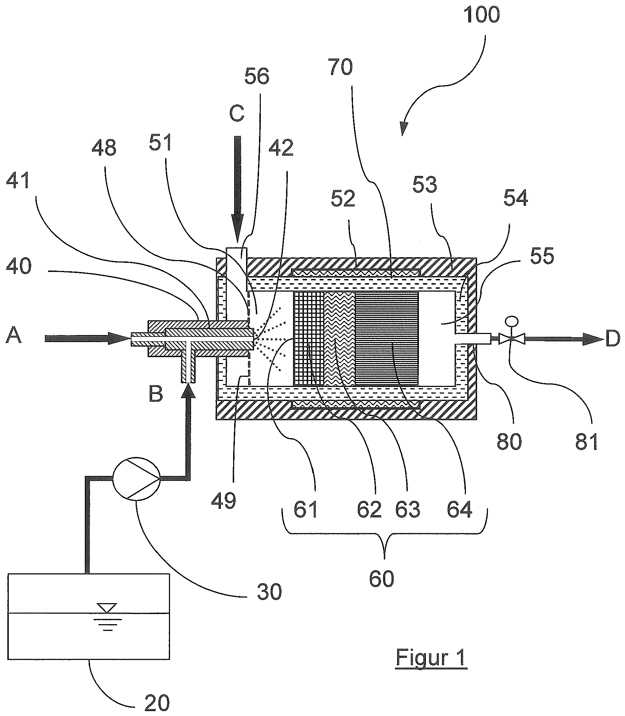

Mit Figur 1 ist ein erster Ammoniakgasgenerator (100) gemäß der vorliegenden Erfindung dargestellt. Der Generator (100) liegt in Form eines Zylinders vor und umfasst eine Eindüsungsvorrichtung (40), eine Katalysatoreinheit (70) und einen Auslass (80) für das gebildete Ammoniakgas. Die Katalysatoreinheit (70) besteht aus einem mehrteiligen Hydrolysekatalysator (60), einerMischkammer (51) und einer Austrittskammer (55). Die Mischkammer wird in Längsrichtung (Strömungsrichtung) begrenzt durch eine Lochscheibe (48) mit einer Vielzahl an Öffnungen (Im Betriebszustand wird die Ammoniakvorläuferlösung (B) aus einem Vorratsbehälter (20) über eine Dosierpumpe (30) zusammen mit einem Zerstäubungsluftstrom (A) über eine Zweistoffdüse (41) mit Düsenöffnung (42) in die Mischkammer (51) des Ammoniakgasgenerators (100) mit einem definierten Sprühwinkel eingesprüht und in feine Tröpfchen verteilt. Zusätzlich wird ein Trägergasstrom (C) über den Einlass (56) in die Mischkammer (51) eingeleitet. Dieser Trägergasstrom (C) wird auf eine Lochscheibe (48) geleitet, in dessen Zentrum die Düsenöffnung (42) der Düse (41) angeordnet ist. Die Düsenöffnung (42) befindet sich auf Höhe der Lochscheibe. Durch die Lochscheibe (48), die eine Vielzahl an Öffnungen (49) aufweist, wird der Trägergasstrom in eine Vielzahl an Teilströmen von Trägergas parallel zur Strömungsrichtung der Katalysatoreinheit erzeugt, wodurch eine Schleierströmung mit Tröpfchen der eingedüsten Ammoniakvorläufersubstanz-Lösung erzeugt wird, die axial in Richtung des Hydrolysekatalysators (60) auf die Hydrolysekatalysatorstirnfläche (61) geführt wird. Der Katalysator (60) ist derart ausgeführt, dass das erste Segment (62) einen elektrisch heizbaren Metallträger mit Hydrolysebeschichtung darstellt. Anschließend folgen ein nichtbeheizter Metallträgerkatalysator (63) ebenfalls mit Hydrolysebeschichtung und ein nichtbeheizter Katalysator (64) mit Hydrolysebeschichtung als Mischerstruktur ausgeführt zur besseren radialen Verteilung. Das erzeugte Ammoniakgas (D) verlässt zusammen mit dem heißen Trägergasstrom den Generator (100) über die Auslasskammer (55) mit dem Auslass (80) und Ventil (81). Der Generator kann durch eine Mantelheizung (52) um das Gehäuse (54) der Katalysatoreinheit zusätzlich beheizt werden. Bis auf den Kopfbereich in dem sich die Eindüsungsvorrichtung (40) befindet, ist der Ammoniakgasgenerator (100) mit einer Wärmeisolierung (53) aus mikroporösem Dämmmaterial umgeben.

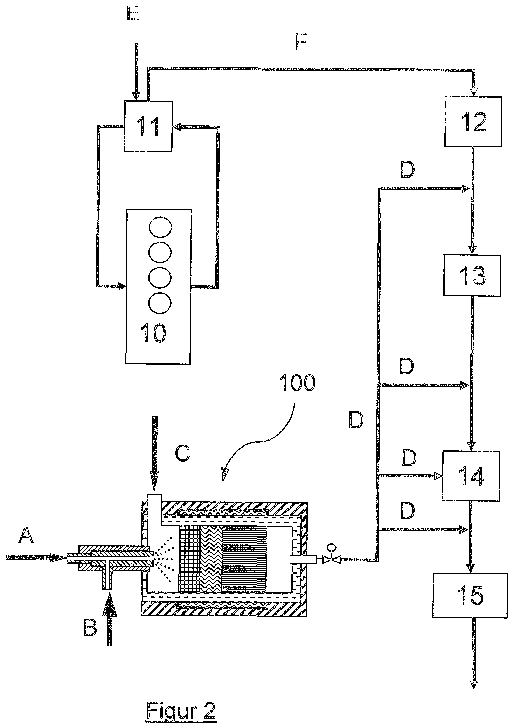

Mit Figur 2 wird ein schematischer Stoffstrom einer Abgasnachbehandlung an einem Verbrennungsmotor (10) dargestellt. Dabei wird das vom Verbrennungsmotor (10) kommende Abgas über eine Aufladeeinheit (11) geführt und im Gegenstrom Zuluft (E) für die Verbrennungskraftmaschine verdichtet. Das Abgas (F) wird über einen Oxidationskatalysator (12) geführt, um eine höhere NO₂-Konzentration im Verhältnis zu NO zu erreichen. Der aus dem Ammoniakgasgenerator (100) kommende ammoniakhaltige Gasstrom (D) kann sowohl vor als auch nach einem Partikelfilter (13) zugegeben und eingemischt werden. Dabei kann ein zusätzlicher Gasmischer (14) in Form eines statischen Mischers oder z.B. eines Venturimischers verwendet werden. Es kann auch vorgesehen sein, dass der ammoniakhaltige Gasstrom (D) in Höhe des zusätzlichen Gasmischers (14) bzw. in den zusätzlichen Gasmischer (14) oder nach dem zusätzlichen Gasmischers (14) in den Abgasstrang eingebracht wird. In jedem Fall wird der ammoniakhaltige Gasstrom (D) jedoch vor dem SCR-Katalysator (15) in den Abgasstrang eingeleitet. Am SCR-Katalysator (15) erfolgt die Reduzierung der NOx mit Hilfe des Reduktionsmittels NH₃ (SCR = selective catalytic reduction). Dabei kann der Ammoniakgasgenerator mit separatem Trägergas oder auch mit einem Abgasteilstrom betrieben werden.

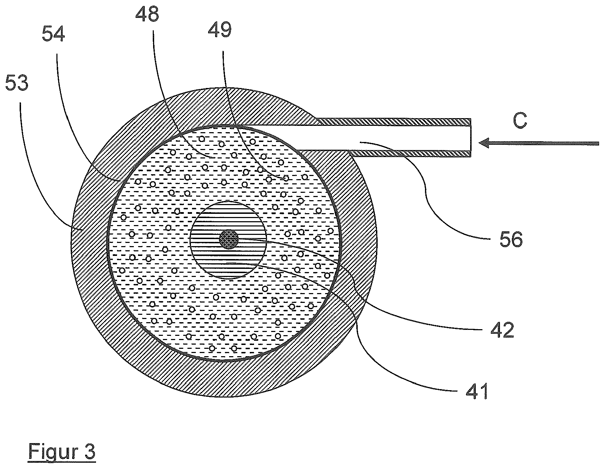

Mit Figur 3 ist eine Detailansicht der Mischkammer (51) im Bereich der Trägergasstromzuführung gezeigt. Das Gehäuse (54) der Katalysatoreinheit ist im Bereich der Mischkammer (51) mit einer Wärmeisolierung (53) aus mikroporösem Dämmmaterial umgeben. Die Zuführung des Trägergases (C) erfolgt im Kopfbereich des Ammoniakgasgenerators bzw. im Kopfbereich der Mischkammer (51). Dabei ist der Einlass (56) für den Trägergasstrom (C) derart gestaltet, dass der Einlass (56) in Strömungsrichtung des Katalysators hinter der Lochscheibe (48) angeordnet ist. In Höhe der Düsenöffnung (42) der Düse (41) ist eine Lochscheibe (48) mit einer Vielzahl an Löchern (49) angeordnet. Diese Lochscheibe erzeugt eine Vielzahl an Trägergasteilströmen, die wiederum eine abwärtsgerichtete Schleierströmung im Generator in Richtung Katalysator einstellt.

### Beispiele

### Ausführungsbeispiel 1:

Der Aufbau entspricht prinzipiell dem mit Figur 1 wiedergegebenen Ammoniakgasgenerator.
Der Ammoniak-Generator ist ausgelegt für eine Dosiermenge von 50 - 2000 g/h NH₃ und als zylindrischer Rohrreaktor ausgeführt. Im Kopfbereich befindet sich mittig angeordnet eine Zweistoffdüse der Firma Albonair (Dosiersystem Albonair) mit einem Sprühwinkel von alpha = 20. Der Sauterdurchmesser im gewählten Betriebsbereich liegt bei D₃₂ = 37 µm. Die Länge der Mischkammer beträgt ca. 250 mm.

Um die Düsenöffnung befindet sich eine Lochscheibe mit 90 mm Durchmesser über den gesamten Querschnitt mit einer Aussparung von 30 mm um die zentral angeordnete Düse. Die Düsenöffnung befindet sich auf Höhe der Lochscheibe.
Die Bohrungen der Lochscheibe betragen alle 5 mm und sind gleichmäßig über den Querschnitt verteilt.

Bei einer weiteren Ausführung werden die Bohrungen von innen (3 mm) nach außen (8mm) hin größer. Durch die Lochscheibe vor dem Düsenaustritt wird ein geringer Staudruck von 0,2 bis 2 mbar erzeugt und damit eine gleichmäßige axiale Strömung des Transportgasstroms und damit vor allem im Randbereich eine Strömung erzwungen, die sich als Schleier schützend um den Wandbereich legt (Schleierströmung). Dadurch wird verhindert, dass durch eine zu starke Wirbelströmung Tröpfchen an die Wand geschleudert werden, zu Ablagerungen führen und der Gesamtammoniakbildungsgrad von üblich 97 % auf unter 90 % absinkt.

Der gesamte Bereich der Mischkammer inklusive der metallischen Lochscheibe sind mit einem Hydrolysekatalysator (katalytisch aktivem TiO₂, Anatas, washcoat ca. 100 g/l, Fa. Interkat) beschichtet zur Vermeidung unerwünschter Nebenreaktionen der eventuelle an den Flächen landenden, versprühten Lösung.

Es hat sich gezeigt, dass durch die gleichmäßige Verteilung der Tröpfchen auf der Katalysatorstirnfläche es nicht zu einer unerwünschten, punktuellen Überbelastung der Katalysatorfläche kommt. In diesem Fall wird die gesamte Fläche für die Umsetzung der Lösung in Ammoniak ohne Nebenprodukte genutzt. Dadurch können keine Ablagerungen entstehen, wie sich bei Tests mit Laufzeiten von mehreren 100 Stunden gezeigt hat. Zeigen sich keine Ablagerungen ist von einer vollständigen Umsetzung der Ammoniakvorläuferlösung auszugehen. Wartung bzgl. Ablagerungen wird in diesem Fall nicht mehr notwendig.

Dabei hat sich gezeigt, dass für diesen Aufbau als Ammoniakvorläuferlösung sowohl wässrige Guanidiniumformiatlösung in der Konzentration von 20 % bis 60 % verwendet werden kann als auch wässrige Harnstofflösung in der Konzentration von 25 % bis 40 % als auch wässrige Mischungen aus Guanidiniumformiat und Harnstoff.

Durch die noch vorhandenen Tröpfchen kommt es an der Katalysatorstirnfläche zu einer Abkühlung von etwa 120 - 150 °C. Aus diesem Grund ist der Reaktor derart ausgeführt, dass die mit dem heißen Trägergasstrom zugeführte Wärmemenge, der integrierte heizbare Hydrolysekatalysator und weitere Energiezuführungen soviel Energie einbringen, dass für die dosierte Menge Lösung keine Abkühlung unter ca. 280 °C stattfindet.

Neben der versprühten Lösung wird ein heißer Trägergasstrom von etwa 1 - 5kg/h ebenfalls im Kopfbereich des Ammoniakgasgenerators derart eingeleitet, dass er sich in einer Schleierströmung um die Innenwand der Katalysatoreinheit legt und laminar durch die Mischkammer geleitet wird. Dadurch wird weiter verhindert, dass versprühte Tröpfchen mit der Innenwand in Kontakt kommen. Der Trägergasstrom wird vor Turbo abgezweigt und über eine Drosseleinrichtung dem Ammoniakgenerator zugeführt. Durch den höheren Druck vor Turbo wird die notwendige Druckdifferenz von 10 mbar über den Reaktor zur Einmischstelle im Abgasstrom vor SCR-Katalysator überwunden und damit der Trägergasstrom durch den Reaktor bewegt. Die Temperatur des Abgasteilstroms beträgt je nach Betriebszustand zwischen 250 °C und 550 °C. Die Temperaturregelung erfolgt in Verbindung mit an der Katalysatorstirnfläche, im und nach dem Katalysator angeordneten Temperatursensoren (Typ K). Alle Außenflächen des Reaktors sind mit einer Isolierung umgeben. Nur der Kopfbereich, in dem sich die Eindüsung der Lösung befindet ist zur besseren Wärmeableitung nicht isoliert.

Im Anschluss an die Mischkammer ist ein beheizbarer Metallträgerkatalysator mit 90 mm Durchmesser und 46,5 Zellen pro cm² (300 cpsi) angeflanscht (Emitec Emicat, maximale Leistung 900 W). Dieser ist als Hydrolysekatalysator ausgeführt, mit katalytisch aktivem TiO₂ (Anatas, washcoat ca. 100 g/l, Fa. Interkat) beschichtet und wird so geregelt, dass die Temperatur an der Katalysatorstirnfläche zwischen 280 und 400 °C liegt. Dabei wird lediglich soviel Energie zugeführt, dass die Abkühlung durch die Verdunstung der Tröpfchen kompensiert wird. Zur Erreichung einer Raumgeschwindigkeit von bis zu minimal 7.000 1/h wird ein weiterer Hydrolysekatalysator mit 62 Zellen pro cm² (400 cpsi) nachgeschaltet, so dass sich ein Gesamtkatalysatorvolumen von etwa 900 ml ergibt.

Der am heißen Hydrolysekatalysator erzeugte Ammoniak strömt frei im Fußbereich, zentral aus einer Auslassöffnung aus dem Reaktorendstück aus. Dabei wird der Auslassbereich vorzugsweise konisch geformt, um Wirbelbildung an Kanten und damit Ablagerungen von möglichen Rückständen zu vermeiden. Das Gasgemisch aus dem Ammoniakgasgenerator wird vorzugsweise mit einer Temperatur > 80 °C zur Vermeidung von Ammoniumcarbonatablagerungen dem motorischen Abgasstrom vor SCR-Katalysator zugeben und in diesem Abgasstrom homogen über einen statischen Mischer verteilt.

Als Material für alle metallischen Bauteile wird 1.4301 (V2A, DIN X 5 CrNi18-10) alternativ 1.4401 (V4A, DIN X 2 CrNiMo 17-12-2), 1.4767 oder auch andere abgaskatalysatortypische Fe-Cr-Al-Legierungen verwendet.

### Ausführungsbeispiel 2:

In Ausführungsbeispiel 2 ist der Ammoniakgenerator derart ausgeführt, dass anstelle einer Zweistoffdüse eine Einstoffdüse (Injektor, Hilite Gen 2 Liquid Only) mit vergleichbarem Sprühbild zum Einsatz kommt. Dabei wird die Zerstäubung vollkommen ohne zusätzliche Druckluft erreicht. Der Sauterdurchmesser liegt bei dieser Ausführung bei D₃₂ = 29 µm. Entsprechend ist bei dieser Ausführung keine Druckluft bzw. zusätzliche Luftpumpe für den Betrieb der Zerstäubung notwendig.

### Ausführungsbeispiel 3:

In Ausführungsbeispiel 3 wird der Ammoniakgenerator derart betrieben, dass Umgebungsluft als Trägergasstrom durch den Ammoniakgenerator gesaugt wird. Der Generator entspricht der Ausführung in Beispiel 1. Als Trägergasstrom wird kalte Umgebungsluft anstelle von einem heißen Abgasnebenstrom verwendet. Die Temperatur der Umgebungsluft beträgt zwischen 10 °C und 25 °C. Die Druckdifferenz über den Reaktor bis zur Einmischstelle im Abgasstrom wird mittels einer Venturidüse im Abgasstrom überwunden. Im Abgasstrom ist stromauf des SCR-Katalysators ein Venturigasmischer derart eingebaut, dass ein entsprechender Unterdruck Umgebungsluft als Trägergasstrom in und durch den Reaktor saugt und mit Ammoniak angereichertes Gas in den Abgasstrom einmischt. Dabei liegt die Einmischstelle des ammoniakhaltigen Gases aus dem Reaktor mittig in der in der Abgasströmung integrierten Venturidüse im engsten Querschnitt. Über mehrere Bohrungen in der Venturidüsenengstelle wird das Gas aus dem Reaktor gesaugt und radial gleichmäßig verteilt dem Abgasstrom zugeführt.

## Patentansprüche

1. Ammoniakgasgenerator (100) zur Erzeugung von Ammoniak aus einer Lösung einer Ammoniakvorläufersubstanz umfassend
i) eine Katalysatoreinheit (70), die einen Katalysator (60) zur Zersetzung und/ oder Hydrolyse von Ammoniakvorläufersubstanzen in Ammoniak und eine dem Katalysator (60) vorgelagerte Mischkammer (51) umfasst, wobei der Katalysator (60) ein Katalysatorvolumen V_{Kat} und die Mischkammer (51) ein Mischkammervolumen V_{Misch} aufweist,
ii) eine Eindüsungsvorrichtung (40) zur Einbringung der Lösung der Ammoniakvorläufersubstanz in die Mischkammer (51),
iii) mindestens einen Einlass (56) für ein Trägergas,
iv) einen Auslass (80) für das gebildete Ammoniakgas,
**dadurch gekennzeichnet, dass**
der Ammoniakgasgenerator weiterhin v) eine Lochscheibe (48) umfasst, durch die das Trägergas in Form einer Vielzahl an parallelen Strahlen senkrecht zur Katalysatorstirnfläche in die Mischkammer (51) eingebracht wird.

2. Ammoniakgasgenerator (100) nach Anspruch 1,
**dadurch gekennzeichnet, dass**
der Ammoniakgasgenerator eine Lochscheibe umfasst, in dessen Zentrum mindestens eine Düsenöffnung einer Düse angeordnet ist.

3. Ammoniakgasgenerator (100) nach Anspruch 1,
**dadurch gekennzeichnet, dass**
die Eindüsungsvorrichtung (40) eine Düse (41) umfasst, die insbesondere Tropfen mit einem Sauterdurchmesser D₃₂ von 26 bis 100 µm erzeugt.

4. Verfahren zur Erzeugung von Ammoniak aus einer Lösung einer Ammoniakvorläufersubstanz unter Verwendung eines Ammoniakgasgenerators (100) umfassend
i) eine Katalysatoreinheit (70), die einen Katalysator (60) zur Zersetzung und/ oder Hydrolyse von Ammoniakvorläufersubstanzen in Ammoniak und eine dem Katalysator (60) vorgelagerte Mischkammer (51) umfasst, wobei der Katalysator (60) ein Katalysatorvolumen Vₖₐₜ und die Mischkammer (51) ein Mischkammervolumen V_{Misch} aufweist,
ii) eine Eindüsungsvorrichtung (40) zur Einbringung der Lösung der Ammoniakvorläufersubstanz in die Mischkammer (51),
iii) mindestens einen Einlass (56) für ein Trägergas, und
iv) einen Auslass (80) für das gebildete Ammoniakgas,
**dadurch gekennzeichnet, dass**
das Trägergas in Form einer Vielzahl an parallelen Strahlen senkrecht zur Katalysatorstirnfläche in die Mischkammer (51) eingebracht wird und diese parallelen Strahlen durch eine Lochscheibe (48) erzeugt werden.

5. Verfahren nach Anspruch 4,
**dadurch gekennzeichnet, dass**
die Lösung der Ammoniakvorläufersubstanz als Tropfen mit einem Sauterdurchmesser D₃₂ von 26 bis 100 µm, insbesondere von 26 bis 49 µm und ganz besonders bevorzugt 26 bis 40 µm, in die Mischkammer (51) eingebracht wird.

6. Verfahren nach Anspruch 4 oder 5,
**dadurch gekennzeichnet, dass**
in dem Verfahren ein Trägergas eingesetzt wird, das eine Temperatur T_{(K)} im Bereich von 10 bis 550 °C aufweist.

7. Verfahren nach Anspruch 4, 5 oder 6,
**dadurch gekennzeichnet, dass**
in dem Verfahren ein Trägergas eingesetzt wird, das mit einer Temperatur T_{(K)} im Bereich von 250 bis 550 °C in die Mischkammer (51) eingebracht wird oder **dadurch gekennzeichnet, dass**
in dem Verfahren ein Trägergas eingesetzt wird, das eine Temperatur T_{(K)} im Bereich von 10 bis 200 °C aufweist.

8. Verfahren nach mindestens einem der Ansprüche 4 bis 7,
**dadurch gekennzeichnet, dass**
die Lösung der Ammoniakvorläufersubstanz als Aerosol in die Vielzahl an parallelen Strahlen des Trägergases eingebracht wird.

9. Verfahren nach mindestens einem der Ansprüche 4 bis 8,
**dadurch gekennzeichnet, dass**
die Lösung der Ammoniakvorläufersubstanz gemeinsam oder getrennt von dem Trägergas in die Mischkammer (51) eingebracht wird oder/und **dadurch gekennzeichnet, dass**
das Trägergas parallel zur Lösung der Ammoniak-Vorläufersubstanz, insbesondere als Bündel von parallelen Strahlen, in die Mischkammer eingebracht wird.

10. Verfahren nach mindestens einem der Ansprüche 4 bis 9,
**dadurch gekennzeichnet, dass**
als Lösung einer Ammoniakvorläufersubstanz, eine wässrige Lösung umfassend Harnstoff, ein Ammoniumsalz, ein Guanidiniumsalz oder Mischungen hiervon eingesetzt wird.

11. Verfahren nach mindestens einem der Ansprüche 4 bis 10,
**dadurch gekennzeichnet, dass**
das Trägergas mit einem Überdruck in die Mischkammer eingebracht wird oder/und
**dadurch gekennzeichnet, dass**
das Trägergas mit einem Druck in die Mischkammer eingebracht wird, der notwendig ist, um eine Druckdifferenz delta p_{(K)} im Bereich von 10 bis 100 mbar zwischen dem Einlass für das Trägergas und dem Auslass für das Ammoniakgas zu überwinden.

12. Verfahren nach mindestens einem der Ansprüche 4 bis 11,
**dadurch gekennzeichnet, dass**
das Trägergas mit einem Unterdruck nach Reaktor durch die Mischkammer gesaugt wird.

13. Verfahren nach mindestens einem der Ansprüche 4 bis 12,
**dadurch gekennzeichnet, dass**
der Katalysator ein beheizter Hydrolysekatalysator zur Hydrolyse der Ammoniakvorläufersubstanz ist.

14. Verfahren zur Reduktion von Stickoxiden in Abgasen von Verbrennungsmotoren, umfassend ein Verfahren zur Erzeugung von Ammoniak gemäß mindestens einem der vorgenannten Ansprüche 4 bis 13, **dadurch gekennzeichnet, dass**
das entstehende Ammoniakgas in den Abgasstrang des Verbrennungsmotors direkt in einen Venturimischer eingebracht wird.

15. Verwendung des Verfahrens nach mindestens einem der Ansprüche 4 bis 13 zur Reduktion von Stickoxiden in Abgasen, insbesondere Abgasen aus Verbrennungsmotoren, aus Gasmotoren, aus Dieselmotoren oder aus Benzinmotoren.

## Claims

1. Ammonia gas generator (100) for producing ammonia from a solution of an ammonia precursor substance, comprising
i) a catalyst unit (70) which comprises a catalyst (60) for the decomposition and/or hydrolysis of ammonia precursor substances to ammonia, and a mixing chamber (51) arranged upstream of the catalyst (60), the catalyst (60) having a catalyst volume V_{cat} and the mixing chamber (51) having a mixing chamber volume Vₘᵢₓ,
ii) an injection device (40) for introducing the solution of the ammonia precursor substance into the mixing chamber (51),
iii) at least one inlet (56) for a carrier gas,
iv) an outlet (80) for the ammonia gas that is formed,
**characterised in that**
the ammonia gas generator further comprises v) a perforated plate (48) through which the carrier gas is introduced into the mixing chamber (51) perpendicularly to the catalyst end face in the form of a plurality of parallel streams.

2. Ammonia gas generator (100) according to claim 1,
**characterised in that**
the ammonia gas generator comprises a perforated plate in the centre of which there is arranged at least one nozzle opening of a nozzle.

3. Ammonia gas generator (100) according to claim 1,
**characterised in that**
**the injection device** (40) comprises a nozzle (41) which produces in particular drops having a Sauter diameter D₃₂ of from 26 to 100 µm.

4. Method for producing ammonia from a solution of an ammonia precursor substance using an ammonia gas generator (100) comprising
i) a catalyst unit (70) which comprises a catalyst (60) for the decomposition and/or hydrolysis of ammonia precursor substances to ammonia, and a mixing chamber (51) arranged upstream of the catalyst (60), the catalyst (60) having a catalyst volume V_{cat} and the mixing chamber (51) having a mixing chamber volume Vₘᵢₓ,
ii) an injection device (40) for introducing the solution of the ammonia precursor substance into the mixing chamber (51),
iii) at least one inlet (56) for a carrier gas, and
iv) an outlet (80) for the ammonia gas that is formed,
**characterised in that**
the carrier gas is introduced into the mixing chamber (51) perpendicularly to the catalyst end face in the form of a plurality of parallel streams, and said parallel streams are produced by a perforated plate (48).

5. Method according to claim 4,
**characterised in that**
the solution of the ammonia precursor substance is introduced into the mixing chamber (51) in the form of drops having a Sauter diameter D₃₂ of from 26 to 100 µm, in particular from 26 to 49 µm and most particularly preferably from 26 to 40 µm.

6. Method according to claim 4 or 5,
**characterised in that**
there is used in the method a carrier gas which has a temperature T_{(K)} in the range of from 10 to 550 °C.

7. Method according to claim 4, 5 or 6,
**characterised in that**
there is used in the method a carrier gas which is introduced into the mixing chamber (51) at a temperature T_{(K)} in the range of from 250 to 550 °C, or **characterised in that**
there is used in the method a carrier gas which has a temperature T(K) in the range of from 10 to 200 °C.

8. Method according to at least one of claims 4 to 7,
**characterised in that**
the solution of the ammonia precursor substance is introduced in the form of an aerosol into the plurality of parallel streams of the carrier gas.

9. Method according to at least one of claims 4 to 8,
**characterised in that**
the solution of the ammonia precursor substance is introduced into the mixing chamber (51) together with or separately from the carrier gas, or/and **characterised in that**
the carrier gas is introduced into the mixing chamber in parallel with the solution of the ammonia precursor substance, in particular in the form of a bundle of parallel streams.

10. Method according to at least one of claims 4 to 9,
**characterised in that**
there is used as the solution of an ammonia precursor substance an aqueous solution comprising urea, an ammonium salt, a guanidinium salt or mixtures thereof.

11. Method according to at least one of claims 4 to 10,
**characterised in that**
the carrier gas is introduced into the mixing chamber with an overpressure, or/and **characterised in that**
the carrier gas is introduced into the mixing chamber with a pressure which is necessary to overcome a pressure difference delta p(K) in the range of from 10 to 100 mbar between the inlet for the carrier gas and the outlet for the ammonia gas.

12. Method according to at least one of claims 4 to 11,
**characterised in that**
the carrier gas is drawn through the mixing chamber with a low pressure downstream of the reactor.

13. Method according to at least one of claims 4 to 12,
**characterised in that**
the catalyst is a heated hydrolysis catalyst for the hydrolysis of the ammonia precursor substance.

14. Method for reducing nitrogen oxides in exhaust gases of combustion engines, comprising a method for producing ammonia according to at least one of the above-mentioned claims 4 to 13,
**characterised in that**
the ammonia gas that forms is introduced into the exhaust gas line of the combustion engine directly into a Venturi mixer.

15. Use of the method according to at least one of claims 4 to 13 for reducing nitrogen oxides in exhaust gases, in particular exhaust gases from combustion engines, from gas engines, from diesel engines or from petrol engines.

## Revendications

1. Générateur de gaz ammoniac (100) servant à produire de l'ammoniac à partir d'une solution d'une substance formant précurseur d'ammoniac, comprenant
i) une unité de catalyseur (70), qui comprend un catalyseur (60) servant à la décomposition et/ou à l'hydrolyse, en ammoniac, de substances formant précurseurs d'ammoniac et une chambre de mélange (51) installée en amont du catalyseur (60), le catalyseur (60) présentant un volume de catalyseur V_{cat} et la chambre de mélange (51) présentant un volume de chambre de mélange V_{mél},
ii) un dispositif d'injection (40) servant à introduire la solution de la substance formant précurseur d'ammoniac dans la chambre de mélange (51),
iii) au moins une entrée (56) pour un gaz porteur,
iv) une sortie (80) pour le gaz ammoniac obtenu,
**caractérisé en ce que**
le générateur de gaz ammoniac comprend par ailleurs v) un disque perforé (48), à travers lequel le gaz porteur est introduit dans la chambre de mélange (51) sous la forme d'une pluralité de jets parallèles de manière perpendiculaire par rapport à la face frontale de catalyseur.

2. Générateur de gaz ammoniac (100) selon la revendication 1,
**caractérisé en ce que** le générateur de gaz ammoniac comprend un disque perforé, au centre duquel au moins une ouverture de buse d'une buse est disposée.

3. Générateur de gaz ammoniac (100) selon la revendication 1,
**caractérisé en ce que** le dispositif d'injection (40) comprend une buse (41), qui produit en particulier des gouttes présentant un diamètre de Sauter D₃₂ allant de 26 à 100 µm.

4. Procédé servant à produire de l'ammoniac à partir d'une solution d'une substance formant précurseur d'ammoniac en utilisant un générateur de gaz ammoniac (100) qui comprend
i) une unité de catalyseur (70), qui comprend un catalyseur (60) servant à la décomposition et/ou à l'hydrolyse de substances formant précurseurs d'ammoniac en ammoniac et une chambre de mélange (51) installée en amont du catalyseur (60), le catalyseur (60) présentant un volume de catalyseur V_{cat} et la chambre de mélange (51) présentant un volume de chambre de mélange V_{mél},
ii) un dispositif d'injection (40) servant à introduire la solution de la substance formant précurseur d'ammoniac dans la chambre de mélange (51),
iii) au moins une entrée (56) pour un gaz porteur,
iv) une sortie (80) pour le gaz d'ammoniac obtenu,
**caractérisé en ce que**
le gaz porteur est introduit dans la chambre de mélange (51) sous la forme d'une pluralité de jets parallèles de manière perpendiculaire par rapport à la face frontale de catalyseur, et **en ce que** lesdits jets parallèles sont produits à travers un disque perforé (48).

5. Procédé selon la revendication 4,
**caractérisé en ce que** la solution de la substance formant précurseur d'ammoniac est introduite dans la chambre de mélange (51) sous la forme de gouttes présentant un diamètre de Sauter D₃₂ allant de 26 à 100 µm, en particulier allant de 26 à 49 µm, et de manière très particulièrement préférée allant de 26 à 40 µm.

6. Procédé selon la revendication 4 ou 5,
**caractérisé en ce qu'**on emploie dans le procédé un gaz porteur, qui présente une température T_{(K)} située dans la plage allant de 10 à 550 °C.

7. Procédé selon la revendication 4, 5 ou 6,
**caractérisé en ce qu'**on emploie dans le procédé un gaz porteur, qui est introduit dans la chambre de mélange (51) à une température T_{(K)} située dans la plage allant de 250 à 550 °C, ou
**caractérisé en ce qu'**on emploie dans le procédé un gaz porteur, qui présente une température T_{(K)} située dans la plage allant de 10 à 200 °C.

8. Procédé selon au moins l'une quelconque des revendications 4 à 7,
**caractérisé en ce que** la solution de la substance formant précurseur d'ammoniac est introduite sous la forme d'un aérosol dans la pluralité de jets parallèles du gaz porteur.

9. Procédé selon au moins l'une quelconque des revendications 4 à 8,
**caractérisé en ce que** la solution de la substance formant précurseur d'ammoniac est introduite conjointement ou séparément du gaz porteur dans la chambre de mélange (51), et/ou
**caractérisé en ce que** le gaz porteur est introduit dans la chambre de mélange en parallèle de la solution de substance formant précurseur d'ammoniac, en particulier sous la forme d'un faisceau de jets parallèles.

10. Procédé selon au moins l'une quelconque des revendications 4 à 9,
**caractérisé en ce qu'**on emploie en tant que solution d'une substance formant précurseur d'ammoniac une solution aqueuse comprenant de l'urée, un sel d'ammonium, un sel de guanidinium ou des mélanges de ces derniers.

11. Procédé selon au moins l'une quelconque des revendications 4 à 10,
**caractérisé en ce que** le gaz porteur est introduit dans la chambre de mélange avec une surpression
et/ou
**caractérisé en ce que** le gaz porteur est introduit dans la chambre de mélange avec une pression, qui est nécessaire pour surmonter une différence de pression delta p_{(K)} située dans la plage allant de 10 à 100 mbar entre l'entrée pour le gaz porteur et la sortie pour le gaz ammoniac.

12. Procédé selon au moins l'une quelconque des revendications 4 à 11,
**caractérisé en ce que** le gaz porteur présentant une surpression est aspiré après le réacteur par la chambre de mélange.

13. Procédé selon au moins l'une quelconque des revendications 4 à 12,
**caractérisé en ce que** le catalyseur est un catalyseur d'hydrolyse chauffé servant à l'hydrolyse de la substance formant précurseur d'ammoniac.

14. Procédé servant à réduire des oxydes d'azote dans des gaz d'échappement de moteurs à combustion interne, comprenant un procédé servant à produire de l'ammoniac selon au moins l'une quelconque des revendications précédentes 4 à 13, **caractérisé en ce que** le gaz ammoniac formé est introduit directement dans un mélangeur Venturi dans la colonne de gaz d'échappement du moteur à combustion interne.

15. Utilisation du procédé selon au moins l'une quelconque des revendications 4 à 13 servant à réduire des oxydes d'azote dans des gaz d'échappement, en particulier des gaz d'échappement provenant de moteurs à combustion interne, provenant de moteurs à gaz, provenant de moteurs Diesel ou provenant de moteurs à essence.
